# EUROPÄISCHE PATENTSCHRIFT

(11) **EP 1 689 065 B1**
(45) Veröffentlichungstag und Bekanntmachung des Hinweises auf die Patenterteilung: **13.08.2008**
(21) Anmeldenummer: 05100817.5
(22) Anmeldetag: 07.02.2005
(51) Int. Cl.: H02K 1/18, H02K 5/173

(54) **Stator eines Elektromotors und Verfahren zu seiner Herstellung**
Stator for an electric motor and its manufacturing process
Stator pour machine électrique et sa méthode de fabrication

(43) Veröffentlichungstag der Anmeldung: 09.08.2006
(73) Patentinhaber: ebm-papst Mulfingen GmbH & Co.KG, 74673 Mulfingen (DE)
(72) Erfinder: BEST, Dieter, 74673, Mulfingen (DE)
(74) Vertreter: Patentanwälte Dr. Solf & Zapf

(56) Entgegenhaltungen:
- DE-A1- 2 626 539
- US-A- 4 129 796
- US-A- 5 663 604
- US-B1- 6 204 583

## Beschreibung

Die Erfindung betrifft einen Stator eines Elektromotors, umfassend ein mit einer elektrischen Isolierung versehenes Statorblechpaket und eine in eine zentrische axiale Öffnung des Statorblechpaketes einpressbare, einen Lagersitz für eine Rotorwelle bildende Statorbuchse. Des Weiteren betrifft die Erfindung ein Verfahren zur Herstellung eines derartigen Stators.

Elektromotoren, bei denen die Statorbuchsen in den Innenraum eines Statorblechpaketes eingepresst werden, sind bekannt. So beschreibt die DE 39 05 773 A1 einen solchen Elektro-Außenläufermotor mit einem speziell ausgebildeten Schutzleiter-Anschlussteil, Dabei ist ein Schutzleiter über das Schutzleiter-Anschlussteil an einem Statorblechpaket angeschlossen. Das Anschlußteil weist hierzu einen sich zwischen einem - beispielsweise metallischen - Lagertragrohr und einem Stirnisolationsschaft einer Isolierendscheibe axial in Richtung des Statorblechpaketes erstreckenden Mittenabschnitt auf, der sich mit einem mit dem Schutzleiter verbundenen, ersten Endabschnitt in einen zwischen einem Motorflansch und dem Stator-Wickelkopf gebildeten Anschlußbereich erstreckt und der zur elektrischen Verbindung einen durch Anlage einerseits an dem Statorblechpaket und andererseits an dem Lagertragrohr kraft- und/oder formschlüssig gehaltenen, zweiten Endabschnitt aufweist. Auch bei dem Stator dieses bekannten Elektromotors liegt somit eine gattungsgemäße Ausbildung vor.

Bei einem aus der DE 36 29 049 C2 bekannten Stator für einen Außenläufermotor besteht dieser Stator aus einem Statorblechpaket, Statorwicklungen sowie einem auf einer Stirnseite angeordneten Motorflansch, wobei das Statorblechpaket Nuten zur Aufnahme von Wicklungsdrähten der Statorwicklungen sowie eine zentrische, axiale Durchgangsöffnung aufweist, in die von beiden Seiten her hohlzylinderförmige Führungsansätze von Lagerbuchsen zur Aufnahme von Wellenlagern einer Rotorwelle eingesetzt sind. Dabei ist auf beiden Stirnseiten unmittelbar auf dem Statorblechpaket jeweils eine Isolier-Endscheibe angeordnet, die einen hohlzylinderförmigen, das Statorblechpaket wickelkopfseitig axial überragenden und die Lagerbuchse umschließenden Stirnisolationsschaft aufweist. Die auf der dem Motorflansch gegenüberliegenden Stirnseite angeordnete Isolier-Endscheibe ist mit der Lagerbuchse, deren Führungsansatz sowie dem Stirnisolationsschaft einstückig aus Kunststoff ausgebildet. Im Vergleich mit dem vorgenannten Dokument ist also zusätzlich auf der dem Rotorboden zugewandten Seite ein auf das Statorblechpaket aufsteckbarer Kunststofflagersitz vorhanden.

Des Weiteren zeigt die EP 769 840 B1 einen kollektorlosen Elektromotor mit eingepresstem Lagertragrohr. Der Motor besteht aus einem an einem Statorflansch befestigten Stator mit Statorwicklungen, einem den Stator auf seiner dem Statorflansch abgekehrten Seite umschließenden Außenläufer sowie einem zwischen dem Statorflansch und dem Außenläufer angeordneten Elektronikmodul, wobei auf einer Schaltplatte unter anderem Leistungshalbleiter vorgesehen sind, zu deren Kühlung ein speziell angeordneter bzw. ausgebildeter hohlzylindrischen Kühlkörper vorgesehen ist. Zur Isolation der Statorwicklungen gegenüber dem Statorblechpaket sind dabei aufsteckbare Isolierendscheiben vorhanden. Zur Lagerung der Rotorwelle ist ein mit dem Statorblechpaket verpressbares Lagertragrohr vorgesehen.

Die DE 27 12 824 C2 beschreibt einen bekannten Stator für einen Außenläufermotor, bei dem die Isoliermittel, das Lageraufnahmeteil und die Wickelkopfträger als einstückiges Kunststoffspritzgussteil ausgeführt sind und das Statorblechpaket einschließen.

Eine ähnliche Ausführungsform ist auch aus der DE 43 22 575 A1 bekannt, die eine Lageranordnung für Elektro-Kleinmotoren beschreibt. Darin ist zur drehbaren Lagerung eines Rotors mindestens ein in einer Aufnahme eines Lageraufnahmeteils eines Stators sitzendes Lagerelement vorgesehen. Die Aufnahme des Lageraufnahmeteils ist einerseits von formstabilen, das Lagerelement durch Anlage an mindestens drei umfänglich verteilten Stellen positionierenden Abschnitten sowie andererseits von mindestens einem in radialer Richtung elastisch verformbaren, das Lagerelement durch kraftschlüssige Anlage halternden Abschnitt gebildet. Die Lageraufnahmeteile sind insbesondere unter dem Aspekt gestaltet, dass ohne besondere Bearbeitung der Lager-Aufnahmen ein einwandfreier, optimaler Lagersitz gewährleistet ist. Bei derartigen Motoren mit Kunststofflagersitz kann aber das Problem auftreten, dass sie zu Schwingungen neigen, die wiederum zu unerwünschten Geräuschbildungen führen können.

Ein Stator der eingangs beschriebenen Art ist aus der US-A-4 129 796 bekannt. Es wird darin auch ein Halbfertigteil beschrieben, welches aus einem Statorblechpaket und einem Lagerrohr besteht und in einem Wirbelsinterverfahren auf beiden Seiten mit je einer dünnen, elektrisch-isolierenden Kunststoffschicht beschichtet ist. Eine Wirbelsinterschicht stellt eine einem Lacküberzug ähnliche Isolationsschicht dar, die allerdings im Vergleich dazu etwas härter ausgebildet und dünner ist. Bei der Bedeckung z. B. eines Stators mit dieser Schicht, bilden insbesondere die Kanten kritische Stellen, da der Überzug sich an diesen Stellen nicht hält und deshalb die Isolationsschicht unterbrochen sein kann. Technologisch ist dieses Problem sehr schwer - d. h. nur mit sehr hohem fertigungstechnischem Aufwand - bzw. gar nicht zu bewältigen,

Der Erfindung liegt die Aufgabe zu Grunde, einen Stator der vorstehend beschriebenen, gattungsgemäßen Art zu schaffen, der mit verringertem Fertigungsaufwand herstellbar ist, wobei gleichzeitig eine Verringerung der Geräuschentwicklung sowie auch eine verbesserte elektrische Isolierung des Lagersitzes erreicht werden soll. Des Weiteren soll es zusätzlich auch möglich sein, in einfacher Weise eine Erdungsverbindung zum Stator herzustellen.

Diese Aufgabe wird erfindungsgemäß dadurch gelöst, dass die metallische, in das Statorblechpaket eingepresste Statorbuchse und das Statorblechpaket mit Ausnahme einer äußeren Umfangsfläche des Statorblechpaketes vollständig von einer gemeinsamen, aus Kunststoff bestehenden, die Isolierung bildenden Umhüllung umgeben sind, die durch eine Umspritzung gebildet ist.

Die Herstellung des erfindungsgemäßen Stators ist fertigungstechnisch einfach. Zunächst wird die metallische Statorbuchse, die insbesondere aus Aluminium oder Stahl bestehen kann, in den Innenraum des Statorblechpaketes eingepresst. Nach dem Einpressen wird diese Einheit dann derart mit Kunststoff umgossen, dass - in axialer Richtung gesehen - beidseitig des Statorblechpaketes Lageraufnahmen für Kugellager der Rotorwelle gebildet werden. Dabei wird das Statorblechpaket, mit Ausnahme seiner äußeren Umfangsfläche vollständig umspritzt, so dass vorteilhafterweise eine Isolation der Wicklungsdrähte, mit denen es nach dem Umspritzen bewickelt werden kann, gegenüber dem Statorblechpaket nicht mehr erforderlich ist.

Der Einsatz von Metall als Material für die Statorbuchse führt wegen der dadurch möglichen sehr stabilen Befestigung des Statorblechpaketes an der metallischen Stahlbuchse zu einer Geräuschverbesserung gegenüber Elektromotoren mit Statoren, wie sie eingangs beschrieben wurden. Bei den akustischen Untersuchungen wurde beispielsweise bei Verwendung einer Aluminiumbuchse festgestellt, dass im Vergleich mit Kunststofflagersitzen eine deutliche Absenkung des Geräuschpegels erzielt werden konnte, durch die Verwendung einer Stahl-Statorbuchse das Geräuschverhalten aber nochmals deutlich verbessert wird.

Nach dem Einfügen der Kugellager in die Lageraufnahmestellen, der Montage einer Leiterplatte, dem Herstellen von Anschlussverbindungen und der Montage des Rotors, kann der Motor bevorzugt mittels Befestigungsschrauben am Gehäuse bzw. am Einsatzort montiert werden. Durch den Kunststoffsitz der Kugellager wird dabei verhindert, dass Stromdurchflüsse durch die Lagerelemente stattfinden.

Zur Aufnahme der Befestigungsschrauben kann die metallische Statorbuchse in bevorzugter Ausführung domartige Aufsätze mit achsparallel ausgerichteten Gewindebohrungen aufweisen. Während für den Schutzleiter-Anschluss bei dem Elektromotor gemäß der oben erwähnten DE 39 05 773 A1 oder auch bei einem aus der DE 200 21 796 U1 bekannten Motor ein spezielles Federelement bzw. ein Schutzleiter-Anschlussteil erforderlich ist, ist es erfindungsgemäß möglich, über die Befestigungsschrauben, die in diese Gewindebohrungen eingreifen, eine durchgängige metallische Verbindung zwischen Statorblechpaket und Montagestelle herzustellen, so dass solchermaßen in einfacher Weise eine Erdung des Statorblechpaketes realisiert werden kann.

Weitere vorteilhafte Ausführungen der Erfindung sind in den Unteransprüchen und der nachfolgenden Beschreibung enthalten. Anhand eines in den beiliegenden Zeichnungsfiguren dargestellten Ausführungsbeispiels wird die Erfindung näher erläutert. Es zeigen:
- Fig. 1 bis 3: in perspektivischer Darstellung wesentliche Fertigungsschritte zur Herstellung eines erfindungsgemäßen Stators,
- Fig. 4: einen Längsschnitt durch einen erfindungsgemäßen Stator,
- Fig. 5: ebenfalls im Längsschnitt, ein Radialgebläse, dessen Elektromotor einen erfindungsgemäßen Stator aufweist.

In den Figuren der Zeichnung sind dieselben Teile auch stets mit denselben Bezugszeichen versehen, so dass sie in der Regel auch jeweils nur einmal beschrieben werden.

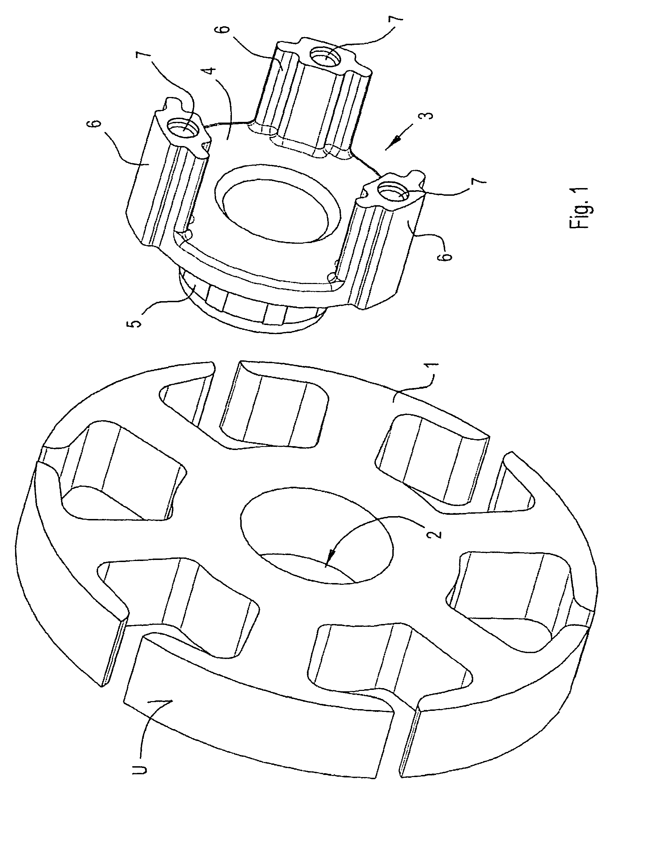

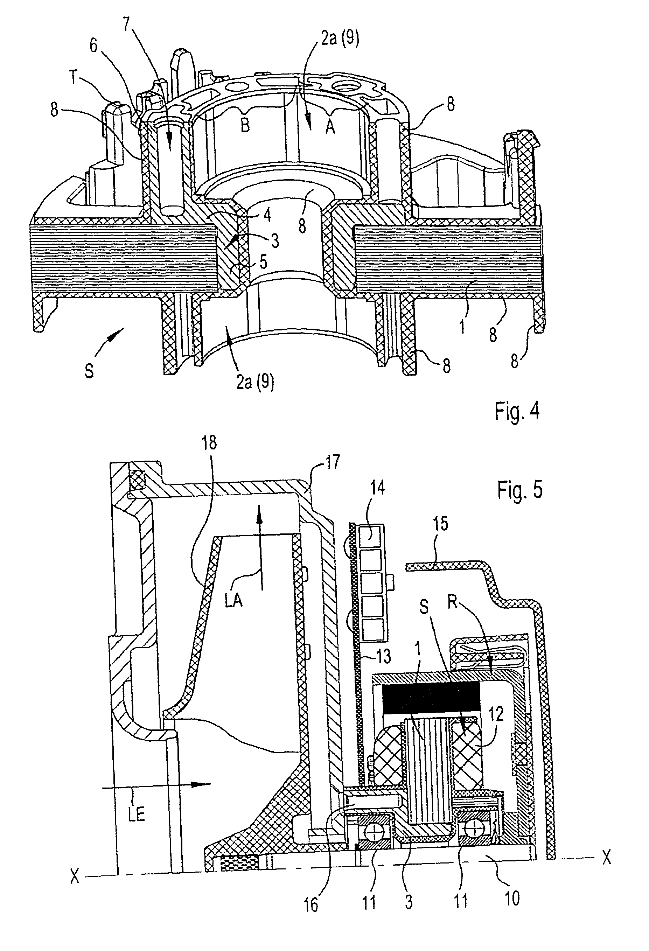

Wie zunächst Fig. 1 zeigt, umfasst ein erfindungsgemäßer Stator eines Elektromotors, wie des in Fig. 5 dargestellten Außenläufer-Motors, ein Statorblechpaket 1 und eine in eine zentrische axiale Öffnung 2 des Statorblechpaketes 1 einpressbare Statorbuchse 3.

Die Statorbuchse 3 besitzt eine ringförmige Grundgestalt. Von einem scheiben-oder ringförmigen Mittelteil 4 ausgehend erstrecken sich dabei in axialer Richtung auf einer im Montagezustand dem Statorblechpaket zugewandten Seite ein - in der dargestellten Ausführung zylinderförmiger - Einpressansatz 5 und auf der gegenüberliegenden Seite - in der dargestellten Ausführung drei - domartige Aufsätze 6 mit achsparallel ausgerichteten Gewindebohrungen 7, deren Funktion untenstehend noch genauer erläutert wird.

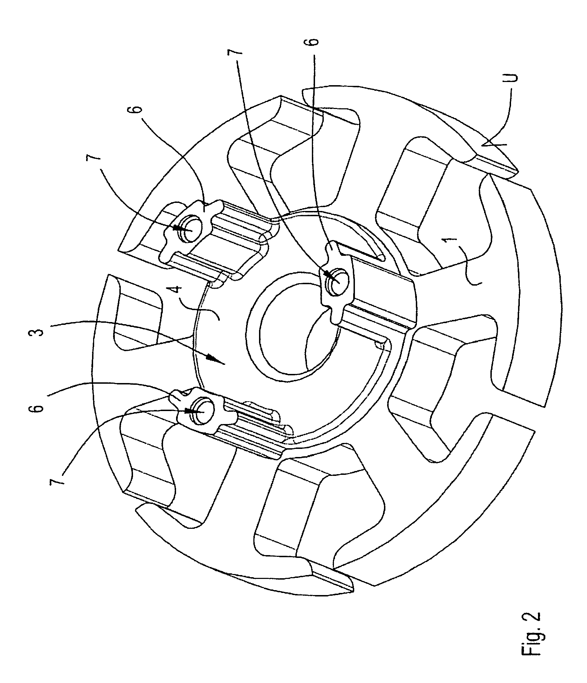

Die Statorbuchse 3 besteht aus Metall, vorzugsweise aus Aluminium oder Stahl. Die Statorbuchse 3 wird in einem ersten Montageschritt in den Innenraum des Stators, d.h. in die axiale Öffnung 2 des Statorblechpaketes 1, eingepresst. Fig. 2 zeigt die nach dem Einpressen entstandene Baueinheit aus Statorblechpaket 1 und Statorbuchse 3.

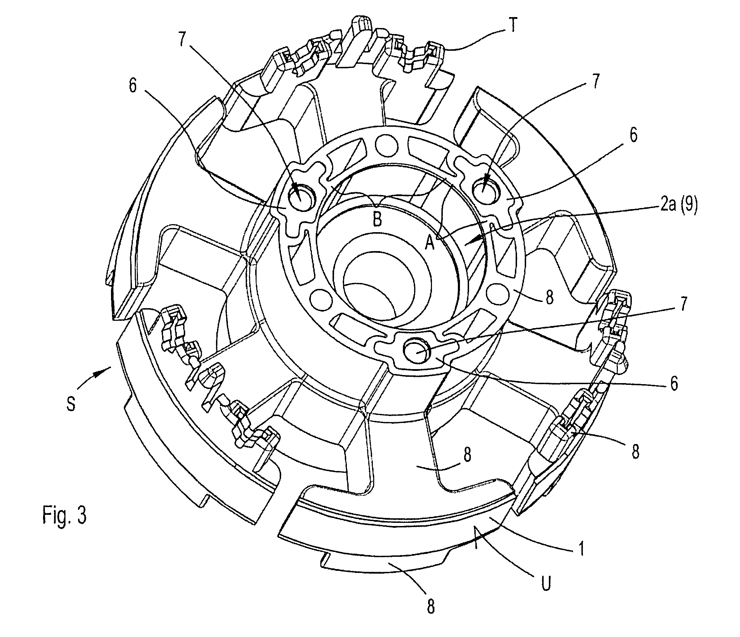

Wie Fig. 3 zeigt, wird nach dem Einpressen die Baueinheit aus Statorblechpaket 1 und Statorbuchse 3 mit Kunststoff umgossen bzw. umspritzt, wodurch eine gemeinsame, aus Kunststoff bestehende, die Isolierung bildende Umhüllung 8 entsteht, die die Baueinheit - zumindest teilweise, bevorzugt aber nahezu vollständig - umgibt.

Bei dieser Isolierung 8 handelt es sich somit nicht um separate Isolierbauteile, wie diese - wie eingangs erwähnt - beispielsweise aus dem Stand der Technik als aufsteckbare Isolierendscheiben bekannt sind, sondern neben dem formschlüssigen Einschluss der Baueinheit aus Statorblechpaket 1 und Statorbuchse 3 entsteht auch eine stoffschlüssige adhäsive Verbindung mit der Isolierung, welche erfindungsgemäß mit dem Begriff Umspritzung 8 bezeichnet ist.

Die Umspritzung 8 bietet auch die Möglichkeit, die Form des erfindungsgemäßen Stators, also beispielsweise seine Innen- und Außenkonturen, in gewünschter Weise in weitem Rahmen zu bestimmen.

So kann dadurch in der axialen Öffnung 2 des Statorblechpaketes bzw. in einer von der Umspritzung 8 umgebenen, koaxial zur Öffnung im Blechpaket 2 angeordneten Öffnung 2a ein Lagersitz für eine Rotorwelle gebildet werden, die in Fig. 5 mit dem Bezugszeichen 10 bezeichnet ist. Insbesondere kann dabei der Lagersitz durch in axialer Richtung (Linie X-X in Fig. 5) beidseitig des Statorblechpaketes 1 angeordnete, in Fig. 3 und 4 mit dem Bezugszeichen 9 bezeichnete Lageraufnahmen für Kugellager 11 gebildet sein.

Wie Fig. 3 und 4 veranschaulichen, ist es auch möglich, durch die Statorbuchse 3 und die Umspritzung 8 - in radialer Richtung gesehen - formstabile Bereiche A, die sich insbesondere im Bereich der domartige Aufsätze 6 der Statorbuchse 3 befinden, und elastische Bereiche B, insbesondere im Bereich zwischen den domartige Aufsätzen 6, auszubilden. Dies gewährleistet eine lange Lagerhaltbarkeit.

Fig. 3 und 4 zeigen dabei auch, dass es mit Vorteil möglich ist, Taschen T - beispielsweise zur Aufnahme von Anschlusssteckkontakten der Wicklungen um das Statorblechpaket 1 - oder mechanische Verbindungselemente - beispielsweise für eine Verrastung - einstückig mit der übrigen Umspritzung 8 auszubilden.

Bevorzugt wird das Statorblechpaket 1 - mit Ausnahme seiner äußeren Umfangsfläche U - vollständig umspritzt, so dass keine weitere Isolation der am erfindungsgemäßen Stator zum Einsatz kommenden Wicklungsdrähte - in Fig. 5 ist der Wickelkopf bzw. die Statorwicklung mit dem Bezugszeichen 12 bezeichnet - gegenüber dem Statorblechpaket 1 mehr erforderlich ist.

Wie bereits erwähnt, zeigt Fig. 5 ein Radialgebläse, dessen Elektromotor einen erfindungsgemäßen Stator aufweist. Die Rotorwelle 10 ist darin über die Kugellager 11 in dem Stator gelagert. Der Rotor ist als Ganzes mit dem Bezugszeichen R, der erfindungsgemäße Stator mit S bezeichnet. Am Stator S ist eine Platte 13 mit Schaltungselektronik 14 angeordnet. Rotor R und Stator S werden durch eine Abdeckung 15 übergriffen.

Der Elektromotor ist mittels Befestigungsschrauben 16 an einem Gebläsegehäuse 17 montiert. Innerhalb dieses Gebläsegehäuses 17 befindet sich das Laufrad 18, welches einen axialen Lufteinlaß LE und einen radial gerichteten Luftauslass LA aufweist. Bei Einsatz eines metallischen Gebläsegehäuses 17 besteht über die Befestigungsschrauben 16 metallische - d.h. elektrisch leitende - Verbindung zwischen dem Statorblechpaket 1 und dem Gebläsegehäuse 17, über die eine Erdung des Statorblechpaketes 1 realisiert ist.

Wie bereits aus den vorstehenden Ausführungen hervorgeht, ist die vorliegende Erfindung ist nicht auf die dargestellten Ausführungsbeispiele beschränkt, sondern umfaßt alle im Sinne der Erfindung gleichwirkenden Mittel und Maßnahmen. So versteht es sich, dass nicht nur ein Radialgebläse einen Elektromotor einen erfindungsgemäßen Stator aufweisen kann, sondern auch andere elektromotorisch antreibbare Vorrichtungen. Auch dem vorstehend beschriebenen Herstellungsverfahren des erfindungsgemäßen Stators wird erfinderische Bedeutung beigemessen.

### Bezugszeichen

- 1: Statorblechpaket (von S)
- 2: Öffnung in 1
- 2a: Öffnung in 3
- 3: Statorbuchse (von S)
- 4: Mittelteil von 3
- 5: Einpressansatz von 3
- 6: Aufsatz an 3
- 7: Gewindebohrung in 6
- 8: Umhüllung
- 9: Lageraufnahme
- 10: Rotorwelle von R
- 11: Kugellager
- 12: Wickelkopf (von S)
- 13: Platte
- 14: Schaltungselektronik
- 15: Abdeckung
- 16: Befestigungsschrauben
- 17: Gebläsegehäuse
- 18: Laufrad

- A: formstabiler Bereich (von S)
- B: elastischer Bereich (von S)
- R: Rotor
- S: Stator
- T: Tasche aus 8
- U: Umfangsfläche von 1
- X-X: Längsachse

## Patentansprüche

1. Stator eines Elektromotors, umfassend ein mit einer elektrischen, aus Kunststoff bestehenden Isolierung (8) versehenes Statorblechpaket (1) und eine in eine zentrische axiale Öffnung (2) des Statorblechpaketes (1) einpressbare, einen Lagersitz für eine Rotorwelle (10) bildende aus Metall bestehende Statorbuchse (3),
**dadurch gekennzeichnet, dass** die metallische, in das Statorblechpaket (1) eingepresste Statorbuchse (3) und das Statorblechpaket (1) mit Ausnahme einer äußeren Umfangsfläche (U) des Statorblechpaketes (1) vollständig von einer gemeinsamen, aus Kunststoff bestehenden, die Isolierung (8) bildenden Umhüllung (8) umgeben sind, die durch eine Umspritzung gebildet ist.

2. Stator nach Anspruch 1,
**dadurch gekennzeichnet, dass** die Statorbuchse (3) aus Aluminium besteht.

3. Stator nach Anspruch 1,
**dadurch gekennzeichnet, dass** die Statorbuchse (3) aus Stahl besteht.

4. Stator nach einem der Ansprüche 1 bis 3,
**dadurch gekennzeichnet, dass** der Lagersitz durch in axialer Richtung (X-X) beidseitig des Statorblechpaketes (1) angeordnete Lager-aufnahmen (9) für Kugellager (11) gebildet ist.

5. Stator nach einem der Ansprüche 1 bis 4,
**dadurch gekennzeichnet, dass** die Statorbuchse (3) domartige Aufsätze (6) mit achsparallel ausgerichteten Gewindebohrungen (7) aufweist.

6. Stator nach einem der Ansprüche 1 bis 5, insbesondere nach Anspruch 5,
**dadurch gekennzeichnet, dass** durch die Statorbuchse (3) und die Umhüllung (8) - in radialer Richtung gesehen - formstabile Bereiche (A), die sich insbesondere im Bereich der domartige Aufsätze (6) der Statorbuchse (3) befinden, und elastische Bereiche (E), insbesondere im Bereich zwischen den domartige Aufsätzen (6), ausgebildet sind.

7. Stator nach einem der Ansprüche 1 bis 6,
**dadurch gekennzeichnet, dass** aus der Umhüllung (8) Taschen (T) und/oder mechanische Verbindungselemente, wie Rastelemente, gebildet sind.

8. Verfahren zur Herstellung eines Stators (S) eines Elektromotors, welcher ein mit einer elektrischen, aus Kunststoff bestehenden Isolierung (8) versehenes Statorblechpaket (1) und eine in eine zentrische axiale Öffnung (2) des Statorblechpaketes (1) einpressbare, einen Lagersitz für eine Rotorwelle (10) bildende aus Metall bestehende Statorbuchse (3) aufweist,
**dadurch gekennzeichnet, dass** in einem ersten Verfahrensschritt die metallische Statorbuchse (3) in das Statorblechpaket (1) eingepresst wird, dann die Statorbuchse (3) und das Statorblechpaket (1) mit Ausnahme einer äußeren Umfangsfläche (U) des Statorblechpaketes (1) vollständig mit einer gemeinsamen, aus Kunststoff bestehenden, durch Umspritzen hergestellten die Isolierung (8) bildenden Umhüllung (8) umgeben wird und danach die entstandene Baueinheit mit einer Statorwicklung (12) versehen wird.

9. Verfahren nach Anspruch 8,
**dadurch gekennzeichnet, dass** der Stator (S) mit einem oder mehreren der Merkmale des kennzeichnenden Teils der Ansprüche 2 bis 7 gefertigt wird.

## Claims

1. A stator of an electric motor, comprising a stator laminated core (1) provided with an electrical insulation (8) consisting of plastics material and a stator bush (3) which consists of metal and which is capable of being pressed into a central axial opening (2) in the stator laminated core (1) and which forms a bearing seat for a rotor shaft (10), **characterized in that** the metallic stator bush (3), pressed into the stator laminated core (1), and the stator laminated core (1) are completely surrounded, with the exception of an external peripheral face (U) of the stator laminated core (1), by a common covering (8) which consists of plastics material and which forms the insulation (8) and which is formed by a surrounding extrusion moulding.

2. A stator according to Claim 1, **characterized in that** the stator bush (3) consists of aluminium.

3. A stator according to Claim 1, **characterized in that** the stator bush (3) consists of steel.

4. A stator according to any one of Claims 1 to 3, **characterized in that** the bearing seat is formed by bearing receiving means (9) - arranged in the axial direction (X-X) on both sides of the stator laminated core (1) - for ball bearings (11).

5. A stator according to any one of Claims 1 to 4, **characterized in that** the stator bush (3) has dome-like attachments (6) with threaded bores (7) which are orientated axially parallel.

6. A stator according to any one of Claims 1 to 5, in particular according to Claim 5, **characterized in that** regions (A), which are dimensionally stable and which are situated in particular in the region of the dome-like attachments (6) of the stator bush (3), and resilient regions (B), in particular in the region between the dome-like attachments (6), are formed by the stator bush (3) and the covering (8) as viewed in the radial direction.

7. A stator according to any one of Claims 1 to 6, **characterized in that** pockets (T) and/or mechanical connecting elements, such as catch elements, are formed from the covering (8).

8. A method of producing a stator (S) of an electric motor, which has a stator laminated core (1) provided with an electrical insulation (8) consisting of plastics material and a stator bush (3) which consists of metal and which is capable of being pressed into a central axial opening (2) in the stator laminated core (1) and which forms a bearing seat for a rotor shaft (10), **characterized in that** in a first method step the metallic stator bush (3) is pressed into the stator laminated core (1), then the stator bush (3) and the stator laminated core (1) are completely surrounded, with the exception of an external peripheral face (U) of the stator laminated core (1), by a common covering (8) which consists of plastics material and which is formed by a surrounding extrusion moulding and which forms the insulation (8), and after that the structural unit formed is provided with a stator winding (12).

9. A method according to Claim 8, **characterized in that** the stator (S) is produced with one or more of the features of the characterizing parts of Claims 2 to 7.

## Revendications

1. Stator d'un moteur électrique, comprenant un empilage de tôles de stator (1) doté d'une isolation (8) électrique, à base de matière synthétique, et une douille de stator (3), pouvant être enfoncée dans une ouverture (2) axiale centrée de l'empilage de tôles de stator (1), formant un siège de palier pour un arbre de rotor (10) et à base de métal,
**caractérisé en ce que** la douille de stator (3) métallique, enfoncée dans l'empilage de tôles de stator (1) et l'empilage de tôles de stator (1), à l'exception d'une surface périphérique (U) extérieure de l'empilage de tôles de stator (1), sont entourés complètement par une enveloppe (8) commune, à base de matière synthétique, et formant l'isolation (8), qui est formée par un surmoulage.

2. Stator selon la revendication 1,
**caractérisé en ce que** la douille de stator (3) est en aluminium.

3. Stator selon la revendication 1,
**caractérisé en ce que** la douille de stator (3) est en acier.

4. Stator selon l'une quelconque des revendications 1 à 3,
**caractérisé en ce que** le siège de palier est formé par des logements de palier (9) disposés dans la direction axiale (X-X) des deux côtés de l'empilage de tôle de stator (1) pour des roulements à billes (11).

5. Stator selon l'une quelconque des revendications 1 à 4,
**caractérisé en ce que** la douille de stator (3) présente des chapeaux (6) en forme de dôme avec des alésages filetés (7) orientés sur des axes parallèles entre eux.

6. Stator selon l'une quelconque des revendications 1 à 5, en particulier selon la revendication 5, **caractérisé en ce que** des zones (A) indéformables - vues dans le sens radial -, qui se trouvent en particulier dans la zone des chapeaux (6) en forme de dôme de la douille de stator (3), et des zones (B) élastiques, en particulier dans la zone entre les chapeaux (6) en forme de dôme, sont réalisées par la douille de stator (3) et l'enveloppe (8).

7. Stator selon l'une quelconque des revendications 1 à 6,
**caractérisé en ce que** des poches (T) et/ou des éléments de liaison mécaniques, tels que des éléments d'encliquetage, sont formés à partir de l'enveloppe (8).

8. Procédé pour la fabrication d'un stator (S) d'un moteur électrique, qui présente un empilage de tôles de stator (1) doté d'une isolation (8) électrique, à base de matière synthétique, et une douille de stator (3) pouvant être enfoncée dans une ouverture (2) axiale centrée de l'empilage de tôles de stator (1), formant un siège de palier pour un arbre de rotor (10) et à base de métal,
**caractérisé en ce que**, dans une première étape du procédé, la douille de stator (3) métallique est enfoncée dans l'empilage de tôles de stator (1), car la douille de stator (3) et l'empilage de tôles de stator (1), à l'exception d'une surface périphérique (U) extérieure de l'empilage de tôles de stator (1), sont entourés complètement avec une enveloppe (8) commune, à base de matière synthétique, fabriquée par surmoulage et formant l'isolation (8) et le module formé est doté ensuite d'un enroulement de stator (12).

9. Procédé selon la revendication 8,
**caractérisé en ce que** le stator (S) est fabriqué avec une ou plusieurs des caractéristiques de la partie caractérisante des revendications 2 à 7.
